# EUROPÄISCHE PATENTANMELDUNG

(11) **EP 3 290 015 A1**
(43) Veröffentlichungstag der Anmeldung: **07.03.2018**
(21) Anmeldenummer: 17001346.0
(22) Anmeldetag: 07.08.2017
(51) Int. Cl.: A61G 5/10

(54) **ROLLSTUHL-VORSATZTRÄGERVORRICHTUNG**

(30) Priorität: 12.08.2016 DE 102016010024
(71) Anmelder: Föhl, Walter, 73630 Remshalden (DE)
(72) Erfinder: Föhl, Walter, 73630 Remshalden (DE)

(57) **Zusammenfassung**

Eine Vorsatzträgervorrichtung mit einem Vorsatzrad und einer Befestigungseinrichtung zur lösbaren Befestigung an einem Rollstuhl umfasst einen Trägerrahmen an der Befestigungseinrichtung und zusätzlich mindestens ein Stützrad, das zwischen einer angehobenen Außerfunktionsposition und einer abgesenkten Funktionsposition verstellbar ist.

## Beschreibung

Die Erfindung bezieht sich auf eine Rollstuhl-Vorsatzträgervorrichtung, die zum Tragen von Lasten an einem Rollstuhl befestigbar ist.

In der DE 10 2007 014 533 B3 wird eine Ergänzungsvorrichtung für einen Rollstuhl beschrieben, bestehend aus einem Vorsatzrad und einer Befestigungseinrichtung, an der das Vorsatzrad angeordnet ist, wobei die Befestigungseinrichtung zwei V-förmig angeordnete Befestigungsrohre umfasst, die mit dem Rollstuhl lösbar zu verbinden sind. Im montierten Zustand werden die verhältnismäßig kleinen Vorderräder des Rollstuhls angehoben, so dass der Rollstuhl im vorderen Bereich nur an dem größeren Vorsatzrad geführt ist. Diese Ausführung ermöglicht es, mit dem Rollstuhl bequem über unebene Wege zu fahren.

Die DE 20 2010 004 536 U1 zeigt eine Vorsatzträgervorrichtung für einen Rollstuhl, die ein Vorsatzrad an einer Befestigungseinrichtung, zwei Stützräder an der Befestigungseinrichtung sowie einen Trägerrahmen zur Aufnahme einer Last offenbart. Die Befestigungseinrichtung ist als ein U-förmiger Befestigungsrahmen ausgebildet, an dessen freien Enden die beiden Stützräder angeordnet sind. Das Vorsatzrad ist über ein Gestell mit dem U-förmigen Befestigungsrahmen verbunden.

Aus der WO 2015/199 334 A1 ist eine Vorsatzträgervorrichtung für einen Rollstuhl bekannt, die ein vorne liegendes Vorsatzrad sowie zwei schwenkbar gelagerte Stützräder aufweist, die jeweils an einem Schwenkhebel angeordnet sind, der an einem zentralen Rahmenteil schwenkbar gelagert ist. Am Rahmenteil befindet sich außerdem eine höhenverstellbar angeordnete Teleskopstange mit einer Befestigungseinrichtung zur Befestigung an dem Rollstuhl. Die Teleskopstange erstreckt sich in Horizontalrichtung an dem zentralen Rahmenteil.

Der Erfindung liegt die Aufgabe zugrunde, mit einfachen konstruktiven Maßnahmen eine leicht handhabbare Vorsatzträgervorrichtung für einen Rollstuhl zu schaffen.

Diese Aufgabe wird erfindungsgemäß mit den Merkmalen des Anspruches 1 gelöst. Die Unteransprüche geben zweckmäßige Weiterbildungen an.

Die erfindungsgemäße Rollstuhl-Vorsatzträgervorrichtung umfasst ein Vorsatzrad und eine Befestigungseinrichtung, die zum einen das Vorsatzrad aufnimmt und zum andern lösbar an einem Rollstuhl befestigt werden kann. Die Vorsatzträgervorrichtung befindet sich im montierten Zustand vor dem Rollstuhl, wobei das Vorsatzrad auf dem Boden steht. Vorteilhafterweise sind die rollstuhleigenen Vorderräder angehoben, so dass diese keinen Kontakt zum Boden aufweisen. In dieser Ausführung steht der Rollstuhl auf seinen beiden großen Hinterrädern und zusätzlich auf dem Vorsatzrad der Vorsatzträgervorrichtung, nicht jedoch auf den kleinen rollstuhleigenen Vorderrädern. Dies gewährleistet zum einen eine statisch bestimmte Ausführung mit insgesamt drei Auflagepunkten auf dem Boden. Zum andern werden eine bessere Führung und ein verbessertes Abrollverhalten insbesondere auf unebenem Untergrund erreicht, das durch eine größere Ausführung des Vorsatzrades im Vergleich zu den rollstuhleigenen Vorderrädern noch gesteigert werden kann. Das verbesserte Führungsverhalten wird zusätzlich durch den vergrößerten Abstand zwischen den Hinterrädern am Rollstuhl und dem Vorsatzrad erreicht.

Die Vorsatzträgervorrichtung umfasst des Weiteren einen Trägerrahmen, der an der Befestigungseinrichtung aufgenommen ist. Zusätzlich weist die Vorsatzträgervorrichtung zwei Stützräder auf, die mit Abstand zu dem Vorsatzrad angeordnet sind und zwischen einer angehobenen Außerfunktionsposition und einer abgesenkten Funktionsposition verstellbar sind. In der Funktionsposition stehen die Stützräder auf dem Boden und können über den Boden rollen. Die Funktionsposition wird typischerweise im nicht montierten Zustand der Vorsatzträgervorrichtung am Rollstuhl eingenommen, so dass die Vorsatzträgervorrichtung einen eigenständigen Wagen mit dem Vorsatzrad sowie den Stützräder auf dem Boden bildet, der unabhängig vom Rollstuhl über den Boden rollen und geschoben werden kann.

Die Außerfunktionsposition nehmen die Stützräder dagegen typischerweise im montierten Zustand der Vorsatzträgervorrichtung am Rollstuhl ein. Die Stützräder sind in der Außerfunktionsposition angehoben und weisen keinen Kontakt zum Boden auf, so dass in der Vorsatzträgervorrichtung nur das Vorsatzrad auf Kontakt zum Boden steht und ein entsprechend verbessertes Abrollverhalten der Gesamtvorrichtung, bestehend aus Rollstuhl und Vorsatzträgervorrichtung, gegeben ist. Es ist jedoch möglich, die Stützräder jederzeit von der angehobenen Außerfunktionsposition in die abgesenkte Funktionsposition zu verstellen, insbesondere auch im montierten Zustand der Vorsatzträgervorrichtung am Rollstuhl, so dass nach dem Lösen der Befestigungseinrichtung vom Rollstuhl die Vorsatzträgervorrichtung den oben beschriebenen, eigenständigen Wagen bildet.

Der Trägerrahmen, der vorzugsweise oberhalb der Befestigungseinrichtung angeordnet und von der Befestigungseinrichtung getragen ist, ermöglicht die Aufnahme einer Last, so dass sich die Vorsatzträgervorrichtung sowohl im montierten Zustand mit dem Rollstuhl als auch im nicht montierten Zustand zum Lastentransport eignet. Es können verschiedenartige Lasten mit der Vorsatzträgervorrichtung transportiert werden, beispielsweise Einkaufstaschen, Kindersitze für Autos, Babyschalen, Kinderwagenaufsatz oder sperrige Gegenstände. Der Trägerrahmen ist in seiner Funktionsposition vorteilhafterweise eben bzw. horizontal ausgerichtet, so dass Lasten auf der Oberseite des Trägerrahmens sowohl im montierten Zustand der Vorsatzträgervorrichtung am Rollstuhl als auch im nicht montierten Zustand sicher transportiert werden können.

Erfindungsgemäß sind insgesamt zwei Stützräder an der Vorsatzträgervorrichtung angeordnet, die bevorzugt synchron zwischen der angehobenen Außerfunktionsposition und der abgesenkten Funktionsposition verstellbar sind. Zu diesem Zweck sind die Stützräder vorteilhafterweise gemeinsam an einer Verstelleinrichtung befestigt und über die Verstelleinrichtung zwischen der angehobenen und der abgesenkten Position verstellbar. Die Verstelleinrichtung ist als ein U-förmiger Radrahmen ausgebildet, der zwei parallele oder annähernd parallele Schenkel sowie ein die Schenkel verbindendes Mittelteil aufweist, wobei an jedem Schenkel ein Stützrad angeordnet ist. Das Mittelteil des U-förmigen Radrahmens wird zur schwenkbaren Lagerung an dem Trägerrahmen verwendet. Dementsprechend sind die Stützräder schwenkbar an der Vorsatzträgervorrichtung gelagert und zwischen der Außerfunktionsposition und der Funktionsposition zu verschwenken.

Es kommen sowohl rotatorische Schwenkbewegungen als auch translatorische Verschiebebewegungen für die Überführung zwischen Außerfunktions- und Funktionsposition des mindestens einen Stützrades in Betracht.

Gemäß noch einer weiteren zweckmäßigen Ausführungsform, sind die Stützräder höhenverstellbar an dem Radrahmen angeordnet, beispielsweise über eine Teleskopeinrichtung. Dies erlaubt in der abgesenkten Funktionsposition eine Höhenanpassung der Vorsatzträgervorrichtung über die Stützräder, so dass verschiedene Anbauhöhen an Rollstühlen ausgeglichen werden können.

Der Radrahmen ist auf der dem Rollstuhl zugewandten Seite schwenkbar gelagert. In der Außerfunktionsposition sind die Stirnseiten der Schenkel des Radrahmens, an denen die Stützräder befestigt sind, dem Rollstuhl abgewandt und liegen vorteilhafterweise zumindest annähernd in der gleichen Ebene wie der Trägerrahmen.

Gemäß einer weiteren zweckmäßigen Ausführung befinden sich im montierten Zustand der Vorsatzträgervorrichtung die Stützräder auf der dem Rollstuhl zugewandten Seite und das Vorsatzrad auf der dem Rollstuhl abgewandten Seite. Die Stützräder werden zum Fahren des Rollstuhls in die angehobene Außerfunktionsposition verstellt, so dass die Gesamtvorrichtung mit Rollstuhl und Vorsatzträgervorrichtung bevorzugt auf den beiden Hinterrädern des Rollstuhls und auf dem Vorsatzrad bewegt wird.

Erfindungsgemäß ist der Trägerrahmen schwenkbar an der Befestigungseinrichtung gehalten. Der Trägerrahmen kann zwischen einer Lastbeförderungsposition, in der der Trägerrahmen heruntergeklappt auf der Befestigungseinrichtung aufliegt, und einer aufgestellten Position verschwenkt werden. Die Schwenkachse des Trägerrahmens an der Befestigungseinrichtung befindet sich auf der dem Rollstuhl abgewandten Seite.

Gemäß noch einer weiteren zweckmäßigen Ausführung ist der Trägerrahmen über mindestens ein verschiebbar angeordnetes Arretierelement an einem Befestigungsrohr der Befestigungseinrichtung befestigbar. In der Lastbeförderungsposition liegt der Trägerrahmen auf der Befestigungseinrichtung auf und wird mithilfe des Arretierelementes an der Befestigungseinrichtung lösbar fixiert. Das Arretierelement ist an dem Trägerrahmen verschiebbar gehalten und kann entsprechend an verschiedenen Positionen an dem Befestigungsrohr der Befestigungseinrichtung befestigt werden. Dies ermöglicht es, verschiedene Relativpositionen zwischen dem Trägerrahmen und der Befestigungseinrichtung vorzusehen. Gegebenenfalls ist der Trägerrahmen über mehrere, vorzugsweise jeweils verschiebbar angeordnete Arretierelemente an der Befestigungseinrichtung zu befestigen. Des Weiteren ist es möglich, dass sämtliche Arretierelemente miteinander verbunden sind und gemeinsam verschiebbar sind.

Gemäß noch einer weiteren zweckmäßigen Ausführung ist auf dem Trägerrahmen ein Adaptersystem zur Aufnahme unterschiedlich dimensionierter Transportgüter angeordnet. Das Adaptersystem auf dem Trägerrahmen erlaubt es, verschiedenartige Transportgüter sicher auf dem Trägerrahmen aufzunehmen bzw. auf diesem zu befestigen. Das Adaptersystem weist beispielsweise eine Adapterplatte auf, die Befestigungen für ein spezielles Transportgut, beispielsweise eine Babyschale, aufweist. Das Adaptersystem kann gegebenenfalls austauschbar auf dem Trägerrahmen angeordnet sein.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht einer Vorsatzträgervorrichtung, die an der Vorderseite eines Rollstuhls befestigt ist,
- Fig. 2: die Vorsatzträgervorrichtung mit zwei Stützrädern, die in eine Funktionsposition abgesenkt sind und auf dem Boden stehen,
- Fig. 3: einen Trägerrahmen der Vorsatzträgervorrichtung in einer perspektivischen Ansicht mit den Stützrädern in der angehobenen Außerfunktionsposition,
- Fig. 4: die Vorsatzträgervorrichtung in montierter Position am Rollstuhl, mit einem hochgeschwenkten Trägerrahmen,
- Fig. 5: in vergrößerter Darstellung die gelenkige Lagerung des Trägerrahmens an einer Befestigungseinrichtung der Vorsatzträgervorrichtung.

In den Figuren sind gleiche Bauteile mit gleichen Bezugszeichen versehen.

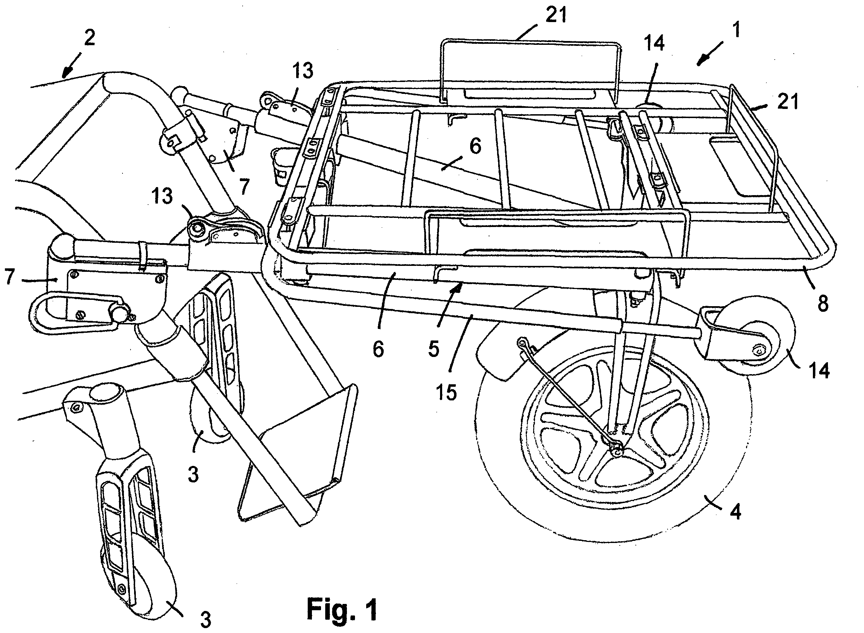

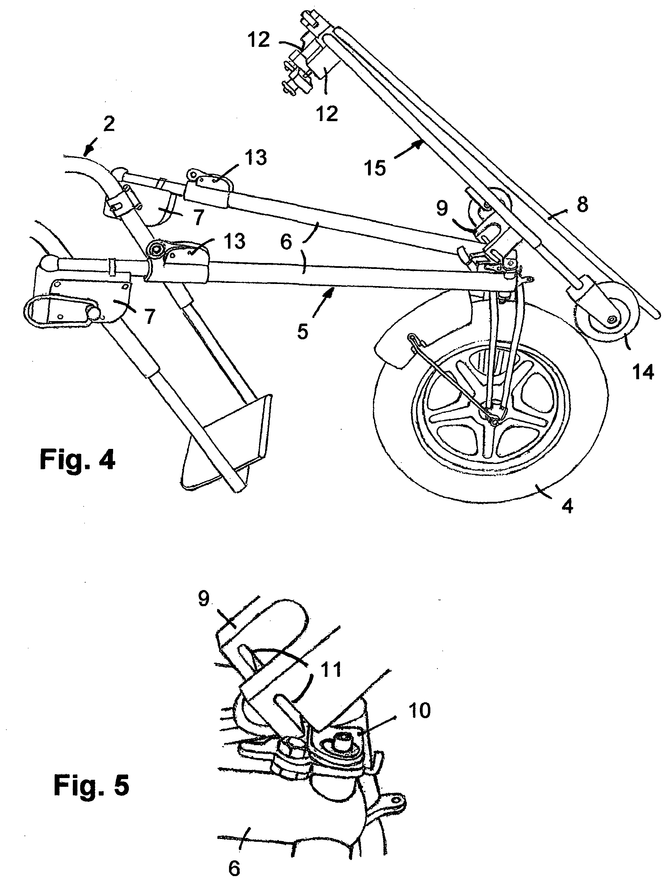

In den Fig. 1 bis 4 ist eine Vorsatzträgervorrichtung 1 dargestellt, die mit einem Rollstuhl 2 (Fig. 1, 4) lösbar verbunden werden kann. Die Vorsatzträgervorrichtung 1 befindet sich vor dem Rollstuhl 2 und kann zum Transport von Lasten eingesetzt werden. Zusätzlich verbessert sich das Fahrverhalten des Rollstuhls 2, insbesondere auf unebenen Wegen, indem durch die Montage der Vorsatzträgervorrichtung 1 die kleinen Vorderräder 3 des Rollstuhls 2 angehoben werden und stattdessen die Abstützung der Gesamtvorrichtung, bestehend aus Rollstuhl 2 und Vorsatzträgervorrichtung 1, über ein Vorsatzrad 4 an der Vorsatzträgervorrichtung 1 erfolgt. Das Vorsatzrad 4 weist einen signifikant größeren Durchmesser als die kleinen Vorderräder 3 am Rollstuhl 2 auf. Bei der Befestigung der Vorsatzträgervorrichtung 1 am Rollstuhl 2 werden die Vorderräder 3 angehoben, so dass der Rollstuhl nur an den üblicherweise großen Hinterrädern des Rollstuhls 2 sowie über das Vorsatzrad 4 geführt ist. Das Vorsatzrad 4 weist einen größeren Abstand zu den Hinterrädern des Rollstuhls 2 als die Vorderräder 3 auf, wodurch ebenfalls das Fahrverhalten verbessert wird.

Die Vorsatzträgervorrichtung 1 umfasst eine Befestigungseinrichtung 5, an der das Vorsatzrad 4 angeordnet und über die die Vorsatzträgervorrichtung 1 mit dem Rollstuhl 2 zu verbinden ist. Die Befestigungseinrichtung 5 umfasst zwei winklig zueinander stehende Befestigungsrohre 6, die an ihrer Position mit geringstem Abstand zueinander das Vorsatzrad 4 aufnehmen und im Bereich der gegenüberliegenden Stirnseiten jeweils ein Befestigungselement 7 zur Befestigung an einem Rohr des Rollstuhls 2 aufweisen.

Die Befestigungselemente 7, über die die Befestigungsrohre 6 der Befestigungseinrichtung 5 mit dem Rollstuhl 2 verbunden werden, können an Rohren des Rollstuhls 2 befestigt sein. Die Enden der Befestigungsrohre 6 werden mit den Befestigungselementen 7 verbunden und können bei Bedarf wieder gelöst werden. Im demontierten Zustand kann die Vorsatzträgervorrichtung 1 über die freien Enden 6a der Befestigungsrohre 6 gehalten und geschoben werden.

Es ist auch möglich, die Befestigungselemente 7 an den Enden 6a der Befestigungsrohre 6 zu befestigen und mit den Rohren des Rollstuhl lösbar zu verbinden.

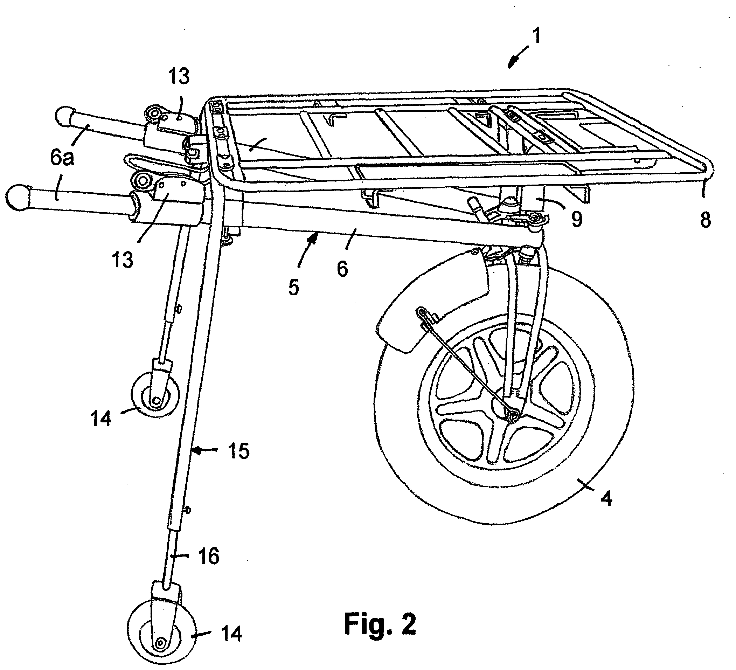

Die Befestigungseinrichtung 5 ist Träger eines rechteckförmigen Trägerrahmens 8, der über ein Trägerelement 9 schwenkbar an der Befestigungseinrichtung 5 gehalten ist. Das Trägerelement 9 befindet sich auf der Unterseite des Trägerrahmens 8 und weist zwei Rastausnehmungen 11 auf (Fig. 5), mit denen das Trägerelement 9 auf einen Rastbügel 10 an der Befestigungseinrichtung 5 in Höhe des Vorsatzrades 4 aufschiebbar ist. Die Rastausnehmungen 11 öffnen sich zu der dem Rollstuhl abgewandten Seite. Das Trägerelement 9 ermöglicht es, den Trägerrahmen 8 zwischen einer horizontalen Lastbeförderungsposition, dargestellt in den Fig. 1 und 2, und einer aufgestellten Position, dargestellt in Fig. 4, zu verschwenken. In der aufgestellten Position gemäß Fig. 4 kann der Trägerrahmen 8 aufgesteckt bzw. abgenommen werden.

Die Schwenkachse am Trägerelement 9 befindet sich oberhalb des Vorsatzrades 4. Beim Hochschwenken wird der, dem Rollstuhl zugewandte Bereich des Trägerrahmens 8 nach oben geschwenkt. Die Rastausnehmungen 11 verlaufen in der Lastbeförderungsposition des Trägerrahmens 8 horizontal und sind auf der dem Rollstuhl abgewandten Seite offen ausgebildet.

An einem, dem Rollstuhl zugewandten Querbügel des Trägerrahmens 8 befinden sich zwei Arretierelemente 12, über die der Trägerrahmen 8 in der horizontalen Lastbeförderungsposition an den Befestigungsrohren 6 der Befestigungseinrichtung 5 fixiert werden kann. Die Arretierelemente 12 sind entlang des Querbügels des Trägerrahmens 8 verschiebbar angeordnet und können auf diese Weise mit verschieden weit auseinander liegenden Befestigungsrohren 6 verbunden werden.

An den Befestigungsrohren 6 befinden sich Stopper 13, die in der horizontalen Lastbeförderungsposition den Trägerrahmen 8 in Richtung Rollstuhl abstützen und verhindern, dass der Trägerrahmen 8 mit seinem Trägerelement 9 versehentlich aus dem Rastbügel 10 herausrutscht.

Die Vorsatzträgervorrichtung 1 ist außerdem mit zwei Stützrädern 14 an einem Radrahmen 15 ausgestattet. Der Radrahmen 15 ist U-förmig ausgebildet und weist zwei seitliche Schenkel 15a und einen verbindenden Querbügel 15b auf, über den der Radrahmen 15 schwenkbar am Trägerrahmen 8 gelagert ist. Die Stützräder 14 sind über jeweils eine Teleskopeinrichtung 16 verschieblich an dem zugeordneten Schenkel 15a gehalten.

Die schwenkbare Lagerung des Radrahmens 15 am Trägerrahmen 8 erfolgt auf der dem Rollstuhl zugewandten Seite an dem unmittelbar benachbarten, parallel verlaufenden Querbügel des Trägerrahmens 8 mithilfe der Arretierelemente 12 sowie eines zwischen den Arretierelementen 12 gelegenen Arretierlagers 17. Der Radrahmen 15 mit den Stützrädern 14 kann zwischen der in den Fig. 1, 3 und 4 dargestellten Außerfunktionsposition und der in Fig. 2 dargestellten Funktionsposition verschwenkt werden. In der Außerfunktionsposition sind die Stützräder 14 angehoben und weisen keinen Kontakt zum Boden auf, in der abgesenkten Funktionsposition sind dagegen die Stützräder nach unten verschwenkt und liegen auf Kontakt zum Boden. Das Arretierlager 17 erlaubt eine Arretierung des Radrahmens 15 in einer festen Stellung sowohl in der angehobenen Außerfunktionsposition als auch in der abgesenkten Funktionsposition am Trägerrahmen 8.

Das Arretierlager 17 weist einen Verstellbügel 18 und einen Arretierhebel 19 auf, über die das Arretierlager 17 zwischen einer Arretierposition und einer Löseposition verstellbar ist, wobei in der Arretierposition der Radrahmen 15 in der jeweils aktuellen Lage fest mit dem Trägerrahmen 8 verbunden ist und in der Löseposition der Radrahmen 15 um die Längsachse des Querbügels 15b verschwenkt werden kann.

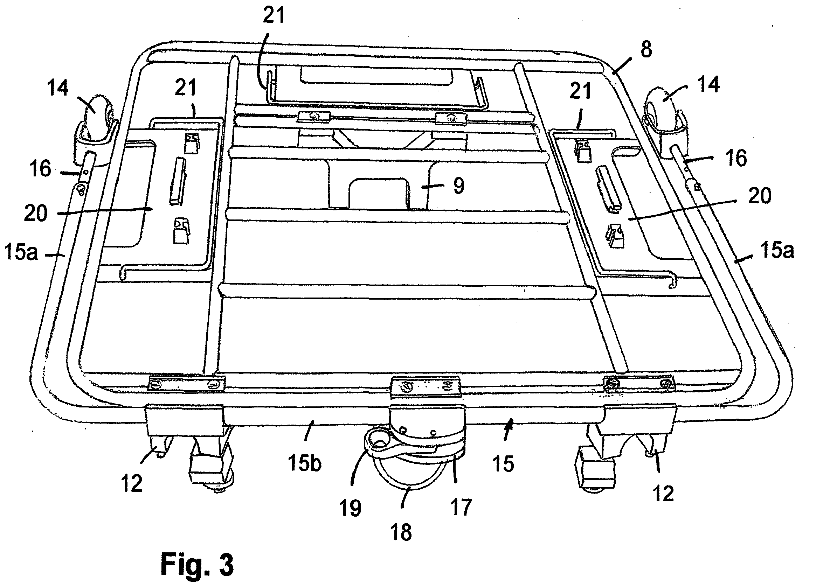

Wie Fig. 3 des Weiteren zu entnehmen, ist der Trägerrahmen 8 mit einem Adaptersystem in Form von zwei Adapterplatten 20 in seitlich gegenüberliegenden Randbereichen am Trägerrahmen ausgerüstet. An den Adapterplatten 20 sowie im vorderen Bereich des Trägerrahmens 8 befinden sich jeweils Sicherungsbügel 21, die zwischen einer heruntergeklappten und einer aufgestellten Position (Fig. 1) verschwenkt werden können. Auf den Adapterplatten 20 befinden sich Rast- und Halteelemente, die es beispielsweise erlauben, einen Kindersitz oder eine Babyschale sicher auf dem Tragrahmen 8 zu verankern.

Die Adapterplatten 20 können gegebenenfalls austauschbar im Trägerrahmen aufgenommen sein.

### Bezugszeichenliste

- 1: Vorsatzträgervorrichtung
- 2: Rollstuhl
- 3: Vorderrad
- 4: Vorsatzrad
- 5: Befestigungseinrichtung
- 6: Befestigungsrohr
- 7: Befestigungselement
- 8: Trägerrahmen
- 9: Trägerelement
- 10: Rastbügel
- 11: Rastausnehmung
- 12: Arretierelement
- 13: Stopper
- 14: Stützrad
- 15: Radrahmen
- 16: Teleskopeinrichtung
- 17: Arretierlager
- 18: Verstellbügel
- 19: Arretierhebel
- 20: Adapterplatte
- 21: Sicherungsbügel

## Patentansprüche

1. Rollstuhl-Vorsatzträgervorrichtung (1), mit einem Vorsatzrad (4) und einer Befestigungseinrichtung (5) zur lösbaren Befestigung der Vorsatzträgervorrichtung (1) an einem Rollstuhl (2), wobei an der Befestigungseinrichtung (5) das Vorsatzrad (4) sowie ein Trägerrahmen (8) zur Aufnahme einer Last angeordnet sind, wobei zusätzlich zu dem Vorsatzrad (4) zwei Stützräder (14) angeordnet sind, die zwischen einer angehobenen Außerfunktionsposition und einer abgesenkten Funktionsposition verstellbar sind,
**dadurch gekennzeichnet,**
**dass** die Stützräder (14) an einem U-förmigen Radrahmen (15) mit zwei parallelen Schenkeln angeordnet sind, wobei das Mittelteil des U-förmigen Radrahmens (15) auf der dem Rollstuhl zugewandten Seite schwenkbar an dem Trägerrahmen (8) angeordnet ist, und dass der Trägerrahmen (8) auf der dem Rollstuhl (2) abgewandten Seite schwenkbar an der Befestigungseinrichtung (5) angeordnet ist.

2. Vorsatzträgervorrichtung (1) nach Anspruche 1,
**dadurch gekennzeichnet,**
**dass** die Stützräder (14) höhenverstellbar am Radrahmen (15) angeordnet sind.

3. Vorsatzträgervorrichtung (1) nach einem der Ansprüche 1 oder 2, **dadurch gekennzeichnet,**
**dass** die Stützräder (14) eine gekoppelte Bewegung zur Überführung zwischen Außerfunktions- und Funktionsposition ausführen.

4. Vorsatzträgervorrichtung (1) nach einem der Ansprüche 1 bis 3,
**dadurch gekennzeichnet,**
**dass** die Stützräder (14) auf der dem Rollstuhl (2) zugewandten Seite und das Vorsatzrad (4) auf der dem Rollstuhl (2) abgewandten Seite der Vorsatzträgervorrichtung (1) angeordnet sind.

5. Vorsatzträgervorrichtung (1) nach einem der Ansprüche 1 bis 4,
**dadurch gekennzeichnet,**
**dass** der Trägerrahmen (8) über mindestens ein verschiebbar angeordnetes Arretierelement (12) an einem Befestigungsrohr (6) der Befestigungseinrichtung (5) befestigbar ist.

6. Vorsatzträgervorrichtung (1) nach einem der Ansprüche 1 bis 5,
**dadurch gekennzeichnet,**
**dass** auf dem Trägerrahmen (8) ein Adaptersystem zur Aufnahme unterschiedlich dimensionierter Transportgüter angeordnet ist.
